# EUROPÄISCHE PATENTSCHRIFT

(11) **EP 3 106 950 B1**
(45) Veröffentlichungstag und Bekanntmachung des Hinweises auf die Patenterteilung: **03.03.2021**
(21) Anmeldenummer: 16166784.5
(22) Anmeldetag: 25.04.2016
(51) Int. Cl.: G05B 19/418

(54) **WERKZEUGSYSTEM FÜR EINE MONTAGEANLAGE UND VERFAHREN FÜR EIN WERKZEUGSYSTEM FÜR EINE MONTAGEANLAGE**
TOOL SYSTEM FOR AN ASSEMBLY PLANT AND METHOD FOR A TOOL SYSTEM FOR AN ASSEMBLY PLANT
SYSTEME D'OUTIL POUR UNE INSTALLATION DE MONTAGE ET PROCEDE POUR UN SYSTEME D'OUTIL POUR UNE INSTALLATION DE MONTAGE

(30) Priorität: 19.06.2015 DE 102015211303
(43) Veröffentlichungstag der Anmeldung: 21.12.2016
(73) Patentinhaber: Robert Bosch GmbH, 70442 Stuttgart (DE)
(72) Erfinder: Court, Denis, 73614 Schorndorf (DE); Hoge, David, 88677 Markdorf (DE); Doelfs, Martin, 70771 Leinfelden-Echterdingen (DE); Wirth, Christian Daniel, 88048 Friedrichshafen-Kluftern (DE); Schmidt, Nils-Holger, 10245 Berlin (DE); Hewing, Michael, 88045 Friedrichshafen (DE)

(56) Entgegenhaltungen:
- DE-A1-102011 108 361
- US-A1- 2003 208 448
- US-A1- 2006 010 006

## Beschreibung

Die vorliegende Erfindung bezieht sich auf ein Werkzeugsystem für eine Montageanlage und ein Verfahren für ein Werkzeugsystem einer Montageanlage.

Bei Montageanlagen, wie Schraubanlagen, Schweißanlagen, usw., kann Fügetechnik zum Einsatz kommen oder können Prozesse stattfinden, die Daten liefern, die in einem zweidimensionalen Koordinatensystem abbildbar sind (z.B. Schraubtechnik, Schweißtechnik, Nieten etc.). Hier können je nach Bedarf verschiedene Steuerungen Verwendung finden, welche jeweils einen der Prozesse steuern und damit die gerade benötigte Fügetechnik durchführen.

Insgesamt können bei der Montageanlage je nach Bedarf über 1000 Steuerungen, beispielsweise ca. 2000 Steuerungen, in einem Werkzeugsystem betrieben werden. Dies erfordert einen hohen Arbeitsaufwand bzw. eine komplexe Logistik bei der Verwaltung der vielen Steuerungen.

Ein Problem ergibt sich, wenn mehrere verschiedene Steuerungen an dem Werkzeugsystem betrieben werden sollen, welche von verschiedenen Herstellern stammen. Solche Steuerungen sind in der Regel nicht kompatibel zueinander, so dass die verschiedenen Steuerungen nicht in einem Werkzeugsystem gemeinsam betrieben werden können.

Problematisch ist außerdem, dass im Laufe des Betriebs des Werkzeugsystems immer wieder neue Prozesse hinzukommen oder entfallen können. Dies erfordert in der Regel eine Neukonfiguration des Werkzeugsystems, was zeitaufwändig ist und damit durch die dafür erforderlichen Systemstillstände und den erforderlichen Personalaufwand kostenintensiv ist.

Müssen hierbei die Stammdaten der einzelnen Steuerungen für die einzelnen Prozesse händisch eingegeben werden, kommt noch erschwerend ein hohes Fehlerrisiko oder ein weiterer Zeitaufwand für Personal zur Minimierung des Fehlerrisikos hinzu.

Außerdem entstehen Probleme, wenn weitere Informationstechnik-Infrastruktur vorhanden ist, welche durch eine Änderung des Werkzugsystems gestört werden könnte.

Zudem existiert auch bei einem Werkzeugsystem oft die Anforderung, Firewalls einzusetzen, um die Sicherheit der Daten zu gewährleisten. Hierbei kann beispielsweise gefordert sein, dass eine unerwünschte Manipulation oder ein Auslesen der Daten von unberechtigten Dritten nicht möglich bzw. soweit wie möglich erschwert werden soll.

US 2003/0208448 A1 zeigt ein Datenvermittlungssystem (data brokering system) für einen integrierten Fernwerkzeugzugriff, für eine Datensammlung und zur Steuerung. Bei dem Datenvermittlungssystem ist ein eCenter Application Server als eine Datenbehandlungseinrichtung vorgesehen, um die Daten des Werkzeugs in einer Datenbank zu speichern und die Daten zu analysieren. Die Daten des Werkzeugs werden von einem Werkzeug-Gateway-Server (Tool Gateway Server) an den eCenter Application Server geliefert. Zudem stellt der Werkzeug-Gateway-Server auch Verbinder zu einem MES (Manufacturing Execution System) bereit, von welchem eine bestehende und gültige betriebswirtschaftliche Produktionsplanung unter Verwendung von einer Rückmeldung aus der Produktion mit dem Werkzeug durchgesetzt wird.

Daher ist es Aufgabe der vorliegenden Erfindung, ein Werkzeugsystem für eine Montageanlage und ein Verfahren für ein Werkzeugsystem einer Montageanlage bereitzustellen, mit welchen die zuvor genannten Probleme gelöst werden können. Insbesondere sollen ein Werkzeugsystem für eine Montageanlage und ein Verfahren für ein Werkzeugsystem für eine Montageanlage bereitgestellt werden, bei welchen eine flexible Konfiguration des Werkzeugsystems einfach, sicher und kostengünstig ermöglicht wird.

Diese Aufgabe wird durch ein Werkzeugsystem für eine Montageanlage nach Anspruch 1 gelöst. Das Werkzeugsystem hat mindestens zwei Werkzeugsteuerungen zur Steuerung eines Werkzeugelements zur Behandlung mindestens eines Werkstücks, eine erste Datenbehandlungseinrichtung zur Entgegennahme der von den mindestens zwei Werkzeugsteuerungen bei der Behandlung des mindestens einen Werkstücks erzeugten Daten und Speicherung der Daten in einer ersten Datenbank, und eine zweite Datenbehandlungseinrichtung zur Verarbeitung der von der ersten Datenbehandlungseinrichtung in der ersten Datenbank gespeicherten Daten für eine Analyse der Daten und/oder Erstellung einer Visualisierung der Daten, wie in Anspruch 1 beschrieben.

Mit dem Werkzeugsystem kann bei flexibler Konfiguration des Werkzeugsystems die Sicherheit der Daten gegen Zugriff durch unberechtigte Dritte wirksam und einfach gewährleistet werden. Es ist möglich, bei dem Werkzeugsystem Firewalls einzusetzen und dennoch eine Zugriffsmöglichkeit auf Produktionsdaten aus dem Niveau des Anwenders (Office-Level) sehr vorteilhaft zu realisieren.

Ein weiterer Vorteil des Werkzeugsystems liegt darin, dass mit dem Werkzeugsystem die Unabhängigkeit zu bestehenden Informationstechnik-Infrastrukturen sichergestellt ist.

Vorteilhafte weitere Ausgestaltungen des Werkzeugsystems sind in den abhängigen Ansprüchen angegeben.

Es ist möglich, dass sich eine Datensicherheitsstufe für die erste Datenbank und die erste Datenbehandlungseinrichtung von einer Datensicherheitsstufe für die zweite Datenbehandlungseinrichtung unterscheidet.

Außerdem können die erste Datenbank und die erste Datenbehandlungseinrichtung durch eine erste Firewall von den mindestens zwei Werkzeugsteuerungen getrennt sein, und/oder die erste Datenbank und die erste Datenbehandlungseinrichtung können durch eine zweite Firewall von der zweiten Datenbehandlungseinrichtung getrennt sein.

Vorzugsweise sind die mindestens zwei Werkzeugsteuerungen ausgestaltet, Prozessdaten für die erste Datenbank und Qualitätsdaten für eine zweite Datenbank bereitzustellen. Hierbei können die Prozessdaten Messwerte in Form von einzelnen Zahlenwerten oder Messkurven umfassen, und die Qualitätsdaten können eine Aussage umfassen, ob die Behandlung des mindestens einen Werkstücks mit dem Werkzeugelement in Ordnung oder nicht in Ordnung war.

Es ist vorteilhaft, wenn die mindestens zwei Werkzeugsteuerungen ausgestaltet sind, nach jeder Behandlung des mindestens einen Werkstücks mit dem Werkzeugelement die bei der Behandlung erzeugten Prozessdaten an die erste Datenbehandlungseinrichtung zu senden. Auf diese Weise kann bei flexibler Konfiguration des Werkzeugsystems die Sicherheit der Daten gegen Zugriff durch unberechtigte Dritte wirksam und einfach gewährleistet werden, wie zuvor beschrieben.

In einer vorteilhaften Ausgestaltung des Werkzeugsystems sind die mindestens zwei Werkzeugsteuerungen zum Senden der Prozessdaten in einem vorbestimmten Protokoll ausgestaltet, bei welchem der Datenkopf der Prozessdaten die Stammdaten der jeweiligen Werkzeugsteuerung aufweist. Auf diese Weise ist es bei dem Werkzeugsystem möglich, eine Kompatibilität zu allen Steuerungen des Werkzeugsystems sicherzustellen, die das Protokoll unterstützen. Das Werkzeugsystem stellt somit sehr vorteilhaft eine offene Schnittstelle bereit. Dadurch können unbegrenzt viele Steuerungen eingebunden werden. Hierbei können die Steuerungen einfach und sicher auch nach der Erstinbetriebnahme in das Werkzeugsystem eingebunden werden.

Bei der zuvor beschriebenen vorteilhaften Ausgestaltung des Werkzeugsystems kann das vorbestimmte Protokoll JSON sein. Alternativ oder zusätzlich können die Stammdaten der jeweiligen Werkzeugsteuerung die Identifikationsnummer der Werkzeugsteuerung und/oder den Montageort der Werkzeugsteuerung und/oder den Name der Werkzeugsteuerung aufweisen.

Gemäß Anspruch 1 ist die erste Datenbehandlungseinrichtung ausgestaltet, eine der mindestens zwei Werkzeugsteuerungen mit den Stammdaten der Werkzeugsteuerung in der Organisationsstruktur der ersten Datenbehandlungseinrichtung neu anzulegen, wenn die erste Datenbehandlungseinrichtung von der Werkzeugsteuerung Daten empfängt, die Werkzeugsteuerung der ersten Datenbehandlungseinrichtung jedoch noch unbekannt ist.

In speziellen Ausgestaltungen kann die mindestens eine Werkzeugsteuerung mindestens eine Schweißsteuerung und/oder mindestens eine Schraubsteuerung und/oder mindestens eine Bohrsteuerung und/oder mindestens eine Nietsteuerung und/oder mindestens eine Stanzsteuerung aufweisen.

Die Aufgabe wird zudem durch ein Verfahren für ein Werkzeugsystem einer Montageanlage nach Anspruch 12 gelöst. Hierbei hat das Werkzeugsystem mindestens zwei Werkzeugsteuerungen zur Steuerung eines Werkzeugelements zur Behandlung mindestens eines Werkstücks, wobei das Verfahren die Schritte aufweist: Steuern, mit einer der mindestens zwei Werkzeugsteuerungen, des Werkzeugelements zur Behandlung des mindestens einen Werkstücks, Entgegennehmen, mit einer ersten Datenbehandlungseinrichtung, der von der Werkzeugsteuerung bei der Behandlung des mindestens einen Werkstücks erzeugten Daten, Speichern der Daten in einer ersten Datenbank, und Verarbeiten, mit einer zweiten Datenbehandlungseinrichtung, der von der ersten Datenbehandlungseinrichtung in der ersten Datenbank gespeicherten Daten für eine Analyse der Daten und/oder Erstellung einer Visualisierung der Daten, wie in Anspruch 12 beschrieben.

Das Verfahren erzielt die gleichen Vorteile, wie sie zuvor in Bezug auf das Werkzeugsystem genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen.

Dabei wird der Fachmann auch Einzelaspekte als Verbesserungen oder Ergänzungen zu der jeweiligen Grundform der Erfindung hinzufügen.

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild einer Montageanlage mit einem Werkzeugsystem gemäß einem ersten Ausführungsbeispiel;
Fig. 2 ein Flussdiagramm eines Verfahrens für ein Werkzeugsystem einer Montageanlage gemäß dem ersten Ausführungsbeispiel; und
Fig. 3 ein stark vereinfachtes schematisches Schaubild von Prozessdaten, die in dem Werkzeugsystem gemäß einem zweiten Ausführungsbeispiel versendet werden.

In den Figuren sind gleiche oder funktionsgleiche Elemente, sofern nichts anderes angegeben ist, mit denselben Bezugszeichen versehen.

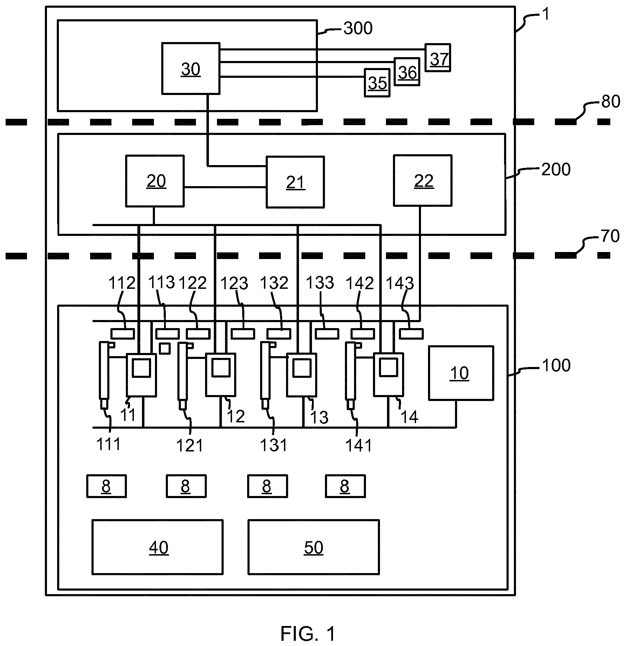

Fig. 1 zeigt ein Werkzeugsystem 1, das bei einer Montageanlage 100 zum Einsatz kommt. Die Montageanlage 100 kann beispielsweise eine Fertigungslinie für ein Fahrzeug, ein elektronisches Gerät, Möbel, usw. sein. Die Montageanlage 100 kann jedoch zusätzlich oder alternativ auch als mehrere einzelne Montagestationen ausgestaltet sein.

Mit dem Werkzeugsystem 1 können Werkstücke 8 mit Hilfe einer Produktionssteuerung 10 und Werkzeugsteuerungen 11, 12, 13, 14 bearbeitet werden. Hierfür steuern die Werkzeugsteuerungen 11, 12, 13, 14 jeweils ein Werkzeugelement 111, 121, 131, 141 an. Die Produktionssteuerung 10 ist den Werkzeugsteuerungen 11, 12, 13, 14 übergeordnet und steuert die Koordination der Werkzeugsteuerungen 11, 12, 13, 14 im Produktionsablauf oder Montageablauf in der Montageanlage 100.

Neben den Steuerungen 10 bis 14 hat das Werkzeugsystem 1 eine erste Datenbehandlungseinrichtung 20, eine erste Datenbank 21, eine zweite Datenbank 22, eine zweite Datenbehandlungseinrichtung 30, Verbindungen zu Web-Anwendungen, wie einer als herkömmlicher Computerbildschirm ausgeführten Web-Anzeigeeinrichtung 35, einer als Tablet-PC (PC = Personalcomputer) ausgeführten Web-Anzeigeeinrichtung 36 und einer als Mobiltelefon ausgeführten Web-Anzeigeeinrichtung 37, ein bereits existierendes Qualitätsmanagementsystem 40, ein bereits existierendes Prozessdatencockpit 50, das als Anzeigeeinrichtung ausgeführt sein kann, eine erste Firewall 70, und eine zweite Firewall 80. Die Web-Anzeigeeinrichtungen 35, 36, 37 sind mit dem Werkzeugsystem 1 jeweils über das Internet verbunden.

Hierbei sind die Werkzeugsteuerungen 11, 12, 13, 14 und die Werkzeugelemente 111, 121, 131, 141 in der Montageanlage 100 angeordnet, welche durch die erste Firewall 70 von einer Schutzzone 200 getrennt sind. Der Schutzzone 200 sind die erste Datenbehandlungseinrichtung 20 sowie die erste und zweite Datenbank 21, 22 zugeordnet. Die Schutzzone 200 ist durch die zweite Firewall 80 von einem Büro- oder Office-Intranet 300 getrennt. Dem Office-Intranet 300 ist die zweite Datenbehandlungseinrichtung 20 zugeordnet. In dem Office-Intranet 300 können Anwender in einem der Montageanlage 100 zugeordneten Büro auf die Daten 112, 113, 122, 123, 132, 133, 142, 143 der Montageanlage 100 zugreifen.

Die erste und zweite Firewall 70, 80 stellen verschiedene Datensicherheitsstufen bereit. Somit hat die erste Datenbank 21 und die erste Datenbehandlungseinrichtung 20 eine andere Datensicherheitsstufe als die zweite Datenbehandlungseinrichtung 30. Hierbei ist die Datensicherheitsstufe für die erste Datenbank 21 und die erste Datenbehandlungseinrichtung 20 höher, da auf diese nicht von einem unberechtigten Dritten, insbesondere über das Internet, zugegriffen werden kann. Zudem ist die Datensicherheitsstufe für die Montageanlage 100 höher als für die erste Datenbank 21 und die erste Datenbehandlungseinrichtung 20.

Im Betrieb sendet die Werkzeugsteuerung 11, nachdem mit dem Werkzeugelement 111 eines oder mehrere der Werkstücke 8 bearbeitet worden ist/sind, Prozessdaten 112, wie einzelne Messdaten oder Messdaten in Kurvenform, usw., an die erste Datenbehandlungseinrichtung 20. Zudem sendet die Werkzeugsteuerung 11 dann oder zumindest teilweise gleichzeitig auch Qualitätsdaten 113 an die zweite Datenbank 22. Die Qualitätsdaten 113 können auch von den Prozessdaten 112 umfasst sein, und so zusammen mit den Prozessdaten 112 an die erste Datenbehandlungseinrichtung 20 gesendet werden. Die erste Datenbehandlungseinrichtung 20 nimmt die Prozessdaten 112 entgegen und speichert sie an der richtigen Stelle in der ersten Datenbank 21. Die Qualitätsdaten 113 werden in der zweiten Datenbank 22 gespeichert.

Der Betrieb der Werkzeugsteuerungen 12, 13, 14 funktioniert analog zu dem zuvor beschriebenen Betrieb der Werkzeugsteuerung 11, so dass auch die Prozessdaten 122, 132, 142 an die erste Datenbehandlungseinrichtung 20 gesendet werden, von der ersten Datenbehandlungseinrichtung 20 entgegengenommen und an der richtigen Stelle in der ersten Datenbank 21 gespeichert werden und die Qualitätsdaten 123, 133, 143 in der zweiten Datenbank 22 gespeichert werden.

Die Qualitätsdaten 113, 123, 133, 143 weisen beispielsweise eine Angabe auf, ob die Prozessdaten 112, 122, 132, 142 in Ordnung oder nicht in Ordnung sind.

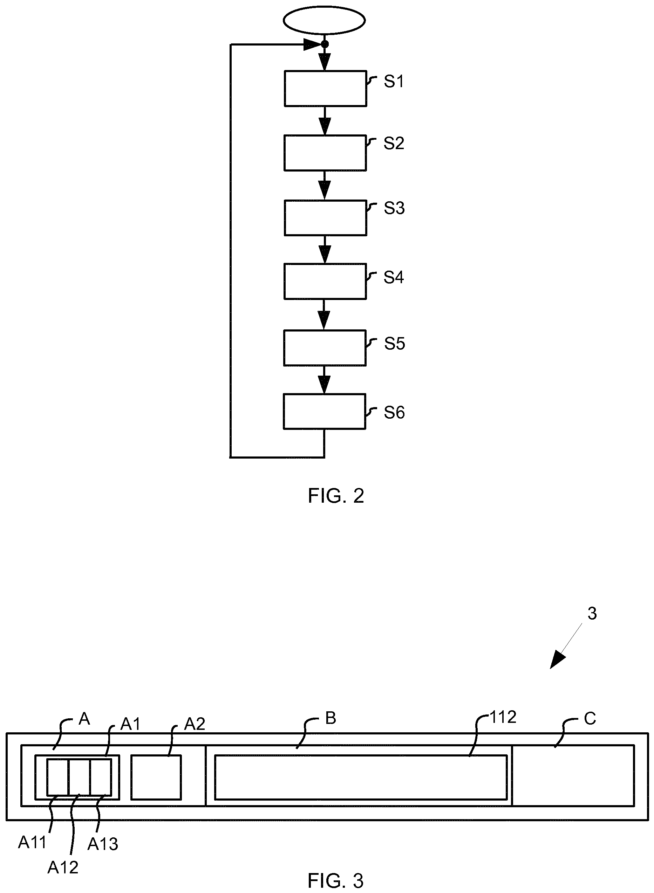

Wie in Fig. 2 veranschaulicht, wird bei einem Verfahren für das Werkzeugsystem 1 nach dem Start des Verfahrens bei einem Schritt S1 mit einer der Werkzeugsteuerungen 11 bis 14 das jeweils zugehörige Werkzeugelement 111, 121, 131, 141 zur Behandlung mindestens eines der Werkstücke 8 angesteuert. Danach geht der Fluss zu einem Schritt S2 weiter.

Bei dem Schritt S2 werden die bei der Behandlung des oder der Werkstücke 8 erzeugten Prozessdaten 112, 122, 132, 142 von der betroffenen Werkzeugsteuerung 11 bis 14 an die erste Datenbehandlungseinrichtung 20 gesendet, wie zuvor beschrieben. Danach geht der Fluss zu einem Schritt S3 weiter.

Bei dem Schritt S3 werden die aufgrund der Behandlung des oder der Werkstücke 8 erzeugten Qualitätsdaten 112, 122, 132, 142 von der betroffenen Werkzeugsteuerung 11 bis 14 an die zweite Datenbank 22 gesendet, wie zuvor beschrieben. Danach geht der Fluss zu einem Schritt S4 weiter.

Bei dem Schritt S4 werden die von der Werkzeugsteuerung 11 bis 14 bei der Behandlung des oder der Werkstücke 8 erzeugten Prozessdaten 112, 122, 132, 142 von der ersten Datenbehandlungseinrichtung 20 entgegengenommen. Danach geht der Fluss zu einem Schritt S5 weiter.

Bei dem Schritt S5 veranlasst die erste Datenbehandlungseinrichtung 20, dass die Prozessdaten 112, 122, 132, 142 in der ersten Datenbank 21 gespeichert werden, woraufhin die Prozessdaten 112, 122, 132, 142 in der ersten Datenbank 21 gespeichert werden. Danach geht der Fluss zu einem Schritt S6 weiter.

Bei dem Schritt S6 verarbeitet die zweite Datenbehandlungseinrichtung 30 die Prozessdaten 112, 122, 132, 142. Hierfür greift die zweite Datenbehandlungseinrichtung 30 auf die erste Datenbank 21 zu und analysiert anschließend die Prozessdaten 112, 122, 132, 142, so dass die Prozessdaten 112, 122, 132, 142 auch auf einer Anzeigeeinrichtung, beispielsweise der Web-Anzeigeeinrichtung 35 angezeigt werden können. Alternativ oder zusätzlich können die Prozessdaten 112, 122, 132, 142 auch ohne weitere Analyse auf der Anzeigeeinrichtung angezeigt werden. Somit führt die zweite Datenbehandlungseinrichtung 30 eine Analyse der Prozessdaten 112, 122, 132, 142 und/oder eine Erstellung einer Visualisierung der Prozessdaten 112, 122, 132, 142 aus. Danach geht der Fluss zu dem Schritt S1 zurück, so dass das Verfahren für dieselbe oder eine andere Werkzugsteuerung 11, 12, 13, 14 gestartet werden kann, wie zuvor beschrieben.

Bei dem Verfahren kann der Schritt S3 alternativ auch vor oder zumindest teilweise zeitgleich mit dem Schritt S2 ausgeführt werden. Zudem kann das Verfahren für mehrere Werkzugsteuerungen 11, 12, 13, 14 zumindest teilweise parallel ablaufen. In dem letzteren Fall würde das Verfahren von einer der Werkzugsteuerungen 11, 12, 13, 14 ausgeführt.

Durch die zuvor beschriebene Architektur des Werkzeugsystems 1 wird zum einen die Unabhängigkeit von bestehenden IT-Infrastrukturen (z.B. Qualitätsdatenbank) erreicht und weitere prozessrelevante Daten für Überwachung (Monitoring) und Analysen gespeichert. Außerdem ist die mit dem Werkzeugsystem 1 realisierte Lösung durch die offene Schnittstelle zu allen Steuerungen 10 bis 14 kompatibel, die das offene Protokoll unterstützen.

Durch diesen architektonischen Aufbau des Werkzeugsystems 1 können die durch die Firewalls 70, 80 geschützten Zonen für die Montageanlage 100, Schutzzone 200 und Office-Intranet 300 sicher überbrückt werden, wie zuvor beschrieben. Dadurch kann vom Niveau des Anwenders (Office-Level) in dem Office-Intranet 300 auf Daten aus der Herstellung oder Produktion, nämlich die Prozessdaten 112, 122, 132, 142, auf sichere Art und Weise zugegriffen werden.

Fig. 3 zeigt den Aufbau eines Datenrahmens 3 für die Prozessdaten 112 als Beispiel in Bezug auf ein zweites Ausführungsbeispiel der Montageanlage 100 beziehungsweise des Werkzeugsystems 1. Die Datenrahmen für die Prozessdaten 122, 132, 142 sind jedoch auf die gleiche Weise aufgebaut.

Wie in Fig. 3 gezeigt, sind die Prozessdaten 112, 122, 132, 142 in einen Datenrahmen 3 gemäß einem vorbestimmten Protokoll gepackt. Anders ausgedrückt, bei dem Werkzeugsystem 1 werden die Prozessdaten 112, 122, 132, 142 gemäß dem vorbestimmten Protokoll gesendet. Insbesondere können die Prozessdaten 112, 122, 132, 142 gemäß dem im Entwurf befindlichen JSON-Protokoll gesendet werden. Nachfolgend sind in Anführungszeichen gestellte Begriffe, wie "node id" usw. Bezeichnungen des JSON-Protokolls.

Gemäß dem vorbestimmten Protokoll ist den Prozessdaten 112 ein Datenkopf A vorangestellt und sind die Prozessdaten 112 einem Datenteil B zugeordnet, welchem ein Schlussteil C folgt. Der Datenkopf A wird zuerst an die erste Datenbehandlungseinrichtung 20 übertragen, der Schlussteil C zuletzt. In dem Datenkopf A sind Stammdaten A1 der Werkzeugsteuerung 11 und Informationen A2 zu den Prozessdaten 112 angeordnet. Der Schlussteil C weist Steuerbits auf, welche das Ende des durch Datenkopf A, Datenteil B und Schlussteil C aufgebauten Datenrahmens anzeigen.

Die Stammdaten A1 weisen, neben nicht dargestellten Steuerbits, die Identifikationsnummer A11 der Werkzeugsteuerung 11 den Montageort A12 der Werkzeugsteuerung 11 und den Namen A13 der Werkzeugsteuerung 11 auf. Es ist jedoch auch möglich, dass die Stammdaten A1 neben den nicht dargestellten Steuerbits nur die Identifikationsnummer A11 oder den Montageort A12 oder den Namen A13 der Werkzeugsteuerung 11 aufweisen. Es sind auch beliebige andere Kombinationen möglich. Die Stammdaten A1 können an beliebiger Stelle im Datenkopf A angeordnet sein, je nachdem, wie dies im vorbestimmten Protokoll festgelegt ist.

Zusätzlich oder alternativ können die Stammdaten A1 der Werkzeugsteuerung 11 neben der Identifikationsnummer A11 "node id" der Werkzeugsteuerung 11 und/oder dem Montageort A12 "location name" der Werkzeugsteuerung 11 und/oder dem Namen A13 "channel" der Werkzeugsteuerung 11 auch ein Format "format" der Werkzeugsteuerung 11 aufweisen, das als Wert "channel" oder "application" für Anwendung hat. Zusätzlich oder alternativ können die Stammdaten A1 auch die laufende Nummer "nr" der Werkzeugsteuerung 11 in der Montageanlage 100 aufweisen. Zusätzlich oder alternativ können die Stammdaten A1 auch eine Hardwarebezeichnung "hardware" der Werkzeugsteuerung 11 aufweisen.

Zusätzlich oder alternativ können die Stammdaten A1 auch eine MAC-Adresse "mac0" der Werkzeugsteuerung 11 aufweisen. Zusätzlich oder alternativ können die Stammdaten A1 auch die IP-Adresse "ip0" der Werkzeugsteuerung 11 aufweisen. Zusätzlich oder alternativ können die Stammdaten A1 auch die Seriennummer "tool serial" der Werkzeugsteuerung 11 aufweisen. Je nach Bedarf sind auch andere Angaben zu der Werkzeugsteuerung 11 in den Stammdaten A1 möglich.

Die Informationen A2 zu den Prozessdaten 112 können aufweisen: ein Ergebnis "result" des mit der Werkzeugsteuerung 11 durchgeführten Prozesses, beispielsweise die Qualitätsdaten 113; ein Datum "date" des mit der Werkzeugsteuerung 11 durchgeführten Prozesses; die Softwareversion der Software "sw version" der Werkzeugsteuerung 11; eine Softwareaufbaubezeichnung (Software Build Bezeichnung) "sw build" der Software der Werkzeugsteuerung 11; eine Nummer "pgr nr" des mit der Werkzeugsteuerung 11 durchgeführten Prozesses; einen Namen "prg name" des mit der Werkzeugsteuerung 11 durchgeführten Prozesses; eine letzte Änderung eines Programms "prg date" des mit der Werkzeugsteuerung 11 durchgeführten Prozesses mit Datum und in Worten; eine Identifikationsnummer "id code" des / der bearbeiteten Werkstücks / Werkstücke 8; die Einheit der gemessenen physikalischen Größe, wie beispielsweise Drehmoment beim Schraubprozess "torque unit"; ein Abbruchkriterium "last cmd" für den durchgeführten Prozess; eine Identifikationsnummer der Einrichtung, welche den Abbruch des durchgeführten Prozesses vorgenommen hat "stopped by"; eine Dauer "duration" des durchgeführten Prozesses. Bei einem Schraubprozess können zusätzlich eine Zeilenbezeichnung der letzten Stufe "last step row" und/oder eine Spaltenbezeichnung der letzten Stufe "last step column" in den Informationen A2 zu den Prozessdaten 112 vorhanden sein.

Nachfolgend ist ein Beispiel für die Informationen in einem Datenkopf A für Prozessdaten eines Schraubprozesses angegeben:
"format": "channel",
"node id": "5.4",
"nr": 34,
"result": "OK",
"hardware": "SE352M",
"mac0": "00-C0-3A-6E-4a-76",
"ip0": "10.23.232.162",
"sw version": "2.400",
"sw build": "Release",
"location name": ["1", "2", "3", "4", "5", "6", "7"],
"channel": "54 BG1 LT353 DMC",
"prg nr": 0,
"prg name": "XY_OKVerschraubunBG3",
"prg date": "2010-03-22 13:35:53",
"nominal torque": 59.400000,
"date": "2014-11-25 13:32:28",
"id code": "L 000000007960",
"torque unit": "Nm",
"last cmd": "TF Angle",
"stopped by": 4,
"last step row": "15",
"last step column": "A",
"duration": "10.9",
"tool serial": 781000036

Die Prozessdaten 112 umfassen hingegen Informationen zu dem durchgeführten Prozess, wie beispielsweise bei einem Schraubvorgang: "tightening steps": [{

```
             "row":"2",
             "column": "A",
             "name": "500 Grad Links",
             "last cmd": "TF Angle",
             "stopped by": 4,
             "result": "OK",
             "tightening functions": [{
                        "name": "TF Angle",
             "nom": 500,
             "act": 500
             },
             {
             "name": "MF GradientMax",
        "nom": 11,
        "act": -0.043000
        }],
        "graph": {
        "angle values": [],
        "torque values": [],
        "time values": []
        }
        }
```

Die Schraubstufen "tightening steps" werden unverändert in der ersten Datenbank als JSON-String abgespeichert.

Aus den Schraubfunktionen "tightening functions" der bewertenden Stufe (Stufe aus "last step column" und "last step row") werden zusätzlich die minimalen und maximalen Werte sowie die Endwerte ausgelesen und in der Prozessdatentabelle in der ersten Datenbank 21 abgespeichert. Falls es sich bei der bewertenden Stufe um eine erweiterte Schraubstufe "extended" handelt wird diese auch korrekt ausgewertet.

Damit die minimalen und maximalen Werte korrekt ausgelesen und abgespeichert werden, müssen diese in den Schraubfunktionen "tightening functions" enthalten sein, wie beispielsweise "TF AngleMin", "MF Torque Max" oder für eine erweiterte Schraubstufe "extended" in "UfB_MOMENT_MAXWERT_CMD".

Um die graphische Darstellung der Schraubkurve nutzen zu können, müssen in dem JSON Objekt "graph" die Felder Drehwinkelwerte "angle values", Drehmomentwerte "torque values" und Zeitwerte "time values" in Sekunden befüllt sein.

Die Prozessdaten für andere Fügeprozesse, wie Schweißen, Nieten, usw. sind an die für diese Fügeprozesse charakteristischen Werte entsprechend angepasst.

Somit schicken die Werkzeugsteuerungen 11, 12, 13, 14 aktiv nach jedem Schraubvorgang Prozessdaten (einzelne Messwerte, Messkurven etc.) mit dem vorbestimmten Protokoll gemäß Fig. 3. Da der Kopfteil A1 des Datenrahmens 3 in dem vorbestimmten Protokoll gemäß Fig. 3 die Stammdaten A der sendenden Werkzeugsteuerung 11, 12, 13, 14 enthält, weiß die empfangende erste Datenbehandlungseinrichtung 20, ob es sich um Daten von einer bereits bekannten Werkzeugsteuerung 11, 12, 13, 14 handelt und kann die Prozessdaten 112, 122, 132, 142 entsprechend zuordnen. Handelt es sich um Daten von einer bis dato nicht bekannten Werkzeugsteuerung 11, 12, 13, 14, wird die Werkzeugsteuerung 11, 12, 13, 14 von der ersten Datenbehandlungseinrichtung 20 als "nicht zugeordnet" mit ihren Stammdaten A im Übersichtsbaum der Software der ersten Datenbehandlungseinrichtung 20 angelegt.

Ist beispielsweise die Werkzeugsteuerung 11 noch nicht bei der Datenbehandlungseinrichtung 20 und somit der ersten Datenbank 21 bekannt, kann der Anwender die Werkzeugsteuerung 11 dann bequem dem/der entsprechenden Werk/Halle/Anlage im Übersichtsbaum der Software der ersten Datenbehandlungseinrichtung 20 zuordnen. Somit ist für die Werkzeugsteuerung 11 keine händische Eingabe von Stammdaten A, wie Identifikationsnummer A11, Montageort A12, Name A13, etc., notwendig.

Auf diese Weise können die Werkzeugsteuerungen 11, 12, 13, 14, die mit der als Software ausgeführten ersten Datenbehandlungseinrichtung 20 verbunden sind, einfach mit ihren Stammdaten A im Werkzeugsystem 1 angelegt werden, so dass die Werkzeugsteuerungen 11, 12, 13, 14 Daten an die als Software ausgeführte erste Datenbehandlungseinrichtung 20 schicken können. Die Werkzeugsteuerungen 11, 12, 13, 14 melden sich somit automatisch am Werkzeugsystem 1 mit ihren Stammdaten A an, sobald der erste Datensatz mit dem in Fig. 3 gezeigten Aufbau geschickt wird. Damit wird der Aufwand zum Einbinden einer neuen Werkzeugsteuerungen 11, 12, 13, 14 in das Werkzeugsystem 1 geringer als bisher.

Dadurch bietet das Werkzeugsystem 1 ebenfalls eine offene Schnittstelle, die es erlaubt, jede Steuerung 10, 11, 12, 13, 14 daran anzuschließen, die das definierte Datenformat des vorbestimmten Protokolls gemäß Fig. 3 unterstützt. Außerdem ist das Werkzeugsystem 1 komplett unabhängig von bestehender IT-Infrastruktur und beeinflusst diese daher nicht. Somit kann auch mit dieser Lösung aus dem Office-Level auf Produktionsdaten, also die Prozessdaten 112, 122, 132, 142 zugegriffen werden.

Alle zuvor beschriebenen Ausgestaltungen des Werkzeugsystems 1 und des Verfahrens können einzeln oder in allen möglichen Kombinationen Verwendung finden. Insbesondere können alle Merkmale und/oder Funktionen der zuvor beschriebenen Ausführungsbeispiele beliebig kombiniert oder auch weggelassen werden. Zusätzlich sind insbesondere folgende Modifikationen denkbar.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Die Montageanlage 100 kann eine beliebige Montageanlage sein, wie beispielsweise eine Schraubanlage, eine Schweißanlage, usw.. Hierbei kann jede beliebige Fügetechnik zum Einsatz kommen. Allgemein können in der Montageanlage 100 Prozesse (z.B. gemäß Schraubtechnik, Schweißtechnik, Niettechnik, Stanztechnik, Bohrtechnik, usw.) stattfinden, die Daten in einer in einem zweidimensionalen Koordinatensystem abbildbaren Form liefern. Somit kann mindestens eine Werkzeugsteuerung 11 bis 14 des Werkzeugsystems 1 eine Schweißsteuerung sein. Alternativ oder zusätzlich kann mindestens eine Werkzeugsteuerung 11 bis 14 des Werkzeugsystems 1 eine Schraubsteuerung sein. Alternativ oder zusätzlich kann mindestens eine Werkzeugsteuerung 11 bis 14 des Werkzeugsystems 1 eine Bohrsteuerung sein. Alternativ oder zusätzlich kann mindestens eine Werkzeugsteuerung 11 bis 14 des Werkzeugsystems 1 eine Nietsteuerung sein. Alternativ oder zusätzlich kann mindestens eine Werkzeugsteuerung 11 bis 14 des Werkzeugsystems 1 eine Stanzsteuerung sein.

Die Anzahl der Werkzeugsteuerungen 11 bis 14 ist beliebig wählbar. Insbesondere können ca. 2000 Werkzeugsteuerungen 11 bis 14 vorgesehen und in das Werkzeugsystem 1 eingebunden sein.

Auch die Produktionssteuerung 10 kann Daten an die erste Datenbehandlungseinrichtung 20 und/oder die zweite Datenbank 22 senden, auch wenn dies in Fig. 1 nicht dargestellt ist.

Es ist auch denkbar, dass die zweite Datenbehandlungseinrichtung 30 auch auf die zweite Datenbank 22 zugreifen kann, um die Qualitätsdaten 113, 123, 133, 143 beispielsweise auf mindestens einer der Web-Anzeigeeinrichtungen 35, 36, 37 anzuzeigen oder in ihre Analyse mit einzubeziehen.

Außerdem ist es möglich, dass auch die Qualitätsdaten 113, 123, 133, 143 in dem vorbestimmten Protokoll gemäß Fig. 3 gesendet werden.

Zusätzlich oder alternativ zu den Web-Anzeigeeinrichtungen 35, 36, 37 kann auch eine nur mit dem Office-Intranet 300 angeschlossene Anzeigeeinrichtung zumindest einen Teil der Daten 112, 113, 122, 123, 132, 133, 142, 143 anzeigen.

## Patentansprüche

1. Werkzeugsystem (1) für eine Montageanlage (100), mit
mindestens zwei Werkzeugsteuerungen (11 bis 14) zur Steuerung eines Werkzeugelements (111, 121, 131, 141) zur Behandlung mindestens eines Werkstücks (8),
einer ersten Datenbehandlungseinrichtung (20), die mit der Montageanlage (100) verbunden ist sowie zur Entgegennahme der von den mindestens zwei Werkzeugsteuerungen (11 bis 14) bei der Behandlung des mindestens einen Werkstücks (8) erzeugten Daten (112, 122, 132, 142) und Speicherung der Daten (112, 122, 132, 142) in einer ersten Datenbank (21) ausgestaltet ist, und
einer zweiten Datenbehandlungseinrichtung (30), die zum Zugriff auf die erste Datenbank (21) ausgestaltet ist, jedoch nicht mit der ersten Datenbehandlungseinrichtung (20) und der Montageanlage (100) verbunden ist,
wobei die zweite Datenbehandlungseinrichtung (10) zur Verarbeitung der von der ersten Datenbehandlungseinrichtung (20) in der ersten Datenbank (21) gespeicherten Daten (110, 120, 130, 140) für eine Analyse der Daten (112, 122, 132, 142) und/oder Erstellung einer Visualisierung der Daten (112, 122, 132, 142) ausgestaltet ist, und
wobei die erste Datenbehandlungseinrichtung (21) ausgestaltet ist, eine der mindestens zwei Werkzeugsteuerungen (11 bis 14) mit den Stammdaten (A) der Werkzeugsteuerung (11 bis 14) in der Organisationsstruktur der ersten Datenbehandlungseinrichtung (20) neu anzulegen, wenn die erste Datenbehandlungseinrichtung (20) von der Werkzeugsteuerung (11 bis 14) Daten (112, 122, 132, 142) empfängt, die Werkzeugsteuerung (11 bis 14) der ersten Datenbehandlungseinrichtung (21) jedoch noch unbekannt ist.

2. Werkzeugsystem (1) nach Anspruch 1, wobei sich eine Datensicherheitsstufe für die erste Datenbank (21) und die erste Datenbehandlungseinrichtung (20) von einer Datensicherheitsstufe für die zweite Datenbehandlungseinrichtung (30) unterscheidet.

3. Werkzeugsystem (1) nach Anspruch 1 oder 2, wobei die erste Datenbank (21) und die erste Datenbehandlungseinrichtung (20) durch eine erste Firewall (70) von den mindestens zwei Werkzeugsteuerungen (11 bis 14) getrennt sind.

4. Werkzeugsystem (1) nach einem der vorangehenden Ansprüche, wobei die erste Datenbank (21) und die erste Datenbehandlungseinrichtung (20) durch eine zweite Firewall (80) von der zweiten Datenbehandlungseinrichtung getrennt sind.

5. Werkzeugsystem (1) nach einem der vorangehenden Ansprüche, wobei die mindestens zwei Werkzeugsteuerungen (11 bis 14) ausgestaltet sind, Prozessdaten (112, 122, 132, 142) für die erste Datenbank (21) und Qualitätsdaten (113, 123, 133, 143) für eine zweite Datenbank (22) bereitzustellen.

6. Werkzeugsystem (1) nach Anspruch 5, wobei die Prozessdaten (112, 122, 132, 142) Messwerte in Form von einzelnen Zahlenwerten oder Messkurven umfassen, und wobei die Qualitätsdaten (113, 123, 133, 143) eine Aussage umfassen, ob die Behandlung des mindestens einen Werkstücks (8) mit dem Werkzeugelement (111, 121, 131, 141) in Ordnung oder nicht in Ordnung war.

7. Werkzeugsystem (1) nach einem der vorangehenden Ansprüche, wobei die mindestens zwei Werkzeugsteuerungen (11 bis 14) ausgestaltet sind, nach jeder Behandlung des mindestens einen Werkstücks (8) mit dem Werkzeugelement (111, 121, 131, 141) die bei der Behandlung erzeugten Prozessdaten (112, 122, 132, 142) an die erste Datenbehandlungseinrichtung (21) zu senden.

8. Werkzeugsystem (1) nach einem der vorangehenden Ansprüche, wobei die mindestens zwei Werkzeugsteuerungen (11 bis 14) zum Senden der Prozessdaten (112, 122, 132, 142) gemäß einem vorbestimmten Protokoll ausgestaltet sind, bei welchem der Datenkopf (A) der Prozessdaten (112, 122, 132, 142) die Stammdaten (A1) der jeweiligen Werkzeugsteuerung (11 bis 14) aufweist.

9. Werkzeugsystem (1) nach Anspruch 6, wobei das vorbestimmte Protokoll JSON ist.

10. Werkzeugsystem (1) nach Anspruch 8 oder 9, wobei die Stammdaten (A1) der jeweiligen Werkzeugsteuerung (11 bis 14) die Identifikationsnummer (A11) der Werkzeugsteuerung (11 bis 14) und/oder den Montageort (A12) der Werkzeugsteuerung (11 bis 14) und/oder den Name (A13) der Werkzeugsteuerung (11 bis 14) aufweisen.

11. Werkzeugsystem (1) nach einem der vorangehenden Ansprüche, wobei die mindestens eine Werkzeugsteuerung (11 bis 14) mindestens eine Schweißsteuerung und/oder mindestens eine Schraubsteuerung und/oder mindestens eine Bohrsteuerung und/oder mindestens eine Nietsteuerung und/oder mindestens eine Stanzsteuerung aufweist.

12. Verfahren für ein Werkzeugsystem (1) einer Montageanlage (100), das mindestens zwei Werkzeugsteuerungen (11 bis 14) zur Steuerung eines Werkzeugelements (111, 121, 131, 141) zur Behandlung mindestens eines Werkstücks (8) aufweist, wobei das Verfahren die Schritte aufweist
Steuern (S1), mit einer der mindestens zwei Werkzeugsteuerungen (11 bis 14), des Werkzeugelements (111, 121, 131, 141) zur Behandlung des mindestens einen Werkstücks (8),
Entgegennehmen (S4), mit einer ersten Datenbehandlungseinrichtung (20), der von der Werkzeugsteuerung (11 bis 14) bei der Behandlung des mindestens einen Werkstücks (8) erzeugten Daten (112, 122, 132, 142),
Speichern (S5), mit der ersten Datenbehandlungseinrichtung (20), der Daten (112, 122, 132, 142) in einer ersten Datenbank (21), und
Verarbeiten (S6), mit einer zweiten Datenbehandlungseinrichtung (30), der von der ersten Datenbehandlungseinrichtung (20) in der ersten Datenbank (20) gespeicherten Daten (112, 122, 132, 142) für eine Analyse der Daten (112, 122, 132, 142) und/oder Erstellung einer Visualisierung der Daten (112, 122, 132, 142),
wobei die erste Datenbehandlungseinrichtung (20) mit der Montageanlage (100) verbunden ist,
wobei die zweite Datenbehandlungseinrichtung (30) zum Zugriff auf die erste Datenbank (21) ausgestaltet ist, jedoch nicht mit der ersten Datenbehandlungseinrichtung (20) und der Montageanlage (100) verbunden ist, und
wobei die erste Datenbehandlungseinrichtung (21) ausgestaltet ist, eine der mindestens zwei Werkzeugsteuerungen (11 bis 14) mit den Stammdaten (A) der Werkzeugsteuerung (11 bis 14) in der Organisationsstruktur der ersten Datenbehandlungseinrichtung (20) neu anzulegen, wenn die erste Datenbehandlungseinrichtung (20) von der Werkzeugsteuerung (11 bis 14) Daten (112, 122, 132, 142) empfängt, die Werkzeugsteuerung (11 bis 14) der ersten Datenbehandlungseinrichtung (21) jedoch noch unbekannt ist.

## Claims

1. Tool system (1) for an assembly installation (100), having
at least two tool controllers (11 to 14) for controlling a tool element (111, 121, 131, 141) for handling at least one workpiece (8),
a first data handling device (20) which is connected to the assembly installation (100) and is configured to receive the data (112, 122, 132, 142) generated by the at least two tool controllers (11 to 14) when handling the at least one workpiece (8) and to store the data (112, 122, 132, 142) in a first database (21), and
a second data handling device (30) which is configured to access the first database (21), but is not connected to the first data handling device (20) and to the assembly installation (100),
wherein the second data handling device (10) is configured to process the data (110, 120, 130, 140) stored by the first data handling device (20) in the first database (21) in order to analyse the data (112, 122, 132, 142) and/or create a visualization of the data (112, 122, 132, 142), and
wherein the first data handling device (21) is configured to newly create one of the at least two tool controllers (11 to 14) with the master data (A) of the tool controller (11 to 14) in the organizational structure of the first data handling device (20) if the first data handling device (20) receives data (112, 122, 132, 142) from the tool controller (11 to 14), but the tool controller (11 to 14) is still unknown to the first data handling device (21).

2. Tool system (1) according to Claim 1, wherein a data security level for the first database (21) and the first data handling device (20) differs from a data security level for the second data handling device (30).

3. Tool system (1) according to Claim 1 or 2, wherein the first database (21) and the first data handling device (20) are separated from the at least two tool controllers (11 to 14) by a first firewall (70).

4. Tool system (1) according to one of the preceding claims, wherein the first database (21) and the first data handling device (20) are separated from the second data handling device by a second firewall (80).

5. Tool system (1) according to one of the preceding claims, wherein the at least two tool controllers (11 to 14) are configured to provide process data (112, 122, 132, 142) for the first database (21) and quality data (113, 123, 133, 143) for a second database (22).

6. Tool system (1) according to Claim 5, wherein the process data (112, 122, 132, 142) comprise measured values in the form of individual numerical values or measurement curves, and wherein the quality data (113, 123, 133, 143) comprise a statement regarding whether or not the handling of the at least one workpiece (8) with the tool element (111, 121, 131, 141) was correct.

7. Tool system (1) according to one of the preceding claims, wherein the at least two tool controllers (11 to 14) are configured, after each operation of handling the at least one workpiece (8) with the tool element (111, 121, 131, 141), to transmit the process data (112, 122, 132, 142) generated during handling to the first data handling device (21).

8. Tool system (1) according to one of the preceding claims, wherein the at least two tool controllers (11 to 14) are configured to transmit the process data (112, 122, 132, 142) according to a predetermined protocol, in which the data header (A) of the process data (112, 122, 132, 142) has the master data (A1) of the respective tool controller (11 to 14).

9. Tool system (1) according to Claim 6, wherein the predetermined protocol is JSON.

10. Tool system (1) according to Claim 8 or 9, wherein the master data (A1) of the respective tool controller (11 to 14) have the identification number (A11) of the tool controller (11 to 14) and/or the installation location (A12) of the tool controller (11 to 14) and/or the name (A13) of the tool controller (11 to 14).

11. Tool system (1) according to one of the preceding claims, wherein the at least one tool controller (11 to 14) has at least one welding controller and/or at least one screwing controller and/or at least one drilling controller and/or at least one riveting controller and/or at least one stamping controller.

12. Method for a tool system (1) of an assembly installation (100), which tool system has at least two tool controllers (11 to 14) for controlling a tool element (111, 121, 131, 141) for handling at least one workpiece (8), wherein the method has the steps of
using one of the at least two tool controllers (11 to 14) to control (S1) the tool element (111, 121, 131, 141) for handling the at least one workpiece (8),
using a first data handling device (20) to receive (S4) the data (112, 122, 132, 142) generated by the tool controller (11 to 14) when handling the at least one workpiece (8),
using the first data handling device (20) to store (S5) the data (112, 122, 132, 142) in a first database (21), and
using a second data handling device (30) to process (S6) the data (112, 122, 132, 142) stored by the first data handling device (20) in the first database (20) in order to analyse the data (112, 122, 132, 142) and/or create a visualization of the data (112, 122, 132, 142),
wherein the first data handling device (20) is connected to the assembly installation (100),
wherein the second data handling device (30) is configured to access the first database (21), but is not connected to the first data handling device (20) and to the assembly installation (100), and
wherein the first data handling device (21) is configured to newly create one of the at least two tool controllers (11 to 14) with the master data (A) of the tool controller (11 to 14) in the organizational structure of the first data handling device (20) if the first data handling device (20) receives data (112, 122, 132, 142) from the tool controller (11 to 14), but the tool controller (11 to 14) is still unknown to the first data handling device (21).

## Revendications

1. Système d'outil (1) pour un équipement d'assemblage (100), comprenant
au moins deux commandes d'outil (11 à 14) destinées à commander un élément d'outil (111, 121, 131, 141) servant à manipuler au moins une pièce ouvrée (8),
un premier dispositif de manipulation de données (20), qui est relié à l'équipement d'assemblage (100) et qui est configuré pour réceptionner les données (112, 122, 132, 142) générées par les au moins deux commandes d'outil (11 à 14) lors de la manipulation de l'au moins une pièce ouvrée (8) et enregistrer les données (112, 122, 132, 142) dans une première base de données (21), et
un deuxième dispositif de manipulation de données (30), qui est configuré pour accéder à la première base de données (21), mais n'est toutefois pas relié au premier dispositif de manipulation de données (20) et à l'équipement d'assemblage (100),
le deuxième dispositif de manipulation de données (10) étant configuré pour le traitement des données (110, 120, 130, 140) enregistrées dans la première base de données (21) par le premier dispositif de manipulation de données (20) pour une analyse des données (112, 122, 132, 142) et/ou la production d'une visualisation des données (112, 122, 132, 142), et
le premier dispositif de manipulation de données (21) étant configuré pour créer de nouveau l'une des au moins deux commandes d'outil (11 à 14) avec les données de référence (A) de la commande d'outil (11 à 14) dans la structure d'organisation du premier dispositif de manipulation de données (20) lorsque le premier dispositif de manipulation de données (20) reçoit de la part de la commande d'outil (11 à 14) des données (112, 122, 132, 142), la commande d'outil (11 à 14) étant cependant encore inconnue du premier dispositif de manipulation de données (21).

2. Système d'outil (1) selon la revendication 1, un niveau de sécurité des données pour la première base de données (21) et le premier dispositif de manipulation de données (20) étant différent d'un niveau de sécurité des données pour le deuxième dispositif de manipulation de données (30).

3. Système d'outil (1) selon la revendication 1 ou 2, la première base de données (21) et le premier dispositif de manipulation de données (20) étant séparés des au moins deux commandes d'outil (11 à 14) par un premier pare-feu (70).

4. Système d'outil (1) selon l'une des revendications précédentes, la première base de données (21) et le premier dispositif de manipulation de données (20) étant séparés du deuxième dispositif de manipulation de données par un deuxième pare-feu (80).

5. Système d'outil (1) selon l'une des revendications précédentes, les au moins deux commandes d'outil (11 à 14) étant configurées pour fournir des données de processus (112, 122, 132, 124) pour la première base de données (21) et des données de qualité (113, 123, 133, 143) pour une deuxième base de données (22).

6. Système d'outil (1) selon la revendication 5, les données de processus (112, 122, 132, 124) comprenant des valeurs mesurées sous la forme de valeurs numériques individuelles ou de courbes de mesure, et les données de qualité (113, 123, 133, 143) comprenant une déclaration indiquant si la manipulation de l'au moins une pièce ouvrée (8) avec l'élément d'outil (111, 121, 131, 141) a été conforme ou non conforme.

7. Système d'outil (1) selon l'une des revendications précédentes, les au moins deux commandes d'outil (11 à 14) étant configurées pour, après chaque manipulation de l'au moins une pièce ouvrée (8) avec l'élément d'outil (111, 121, 131, 141), envoyer les données de processus (112, 122, 132, 142) générées lors de la manipulation au premier dispositif de manipulation de données (21).

8. Système d'outil (1) selon l'une des revendications précédentes, les au moins deux commandes d'outil (11 à 14) étant configurées pour envoyer les données de processus (112, 122, 132, 142) conformément à un protocole prédéterminé, avec lequel l'en-tête de données (A) des données de processus (112, 122, 132, 142) comporte les données de référence (A1) de la commande d'outil (11 à 14) respective.

9. Système d'outil (1) selon la revendication 6, le protocole prédéterminé étant le JSON.

10. Système d'outil (1) selon la revendication 8 ou 9, les données de référence (A1) de la commande d'outil (11 à 14) respective comportant le numéro d'identification (A11) de la commande d'outil (11 à 14) et/ou l'emplacement de montage (A12) de la commande d'outil (11 à 14) et/ou le nom (A13) de la commande d'outil (11 à 14).

11. Système d'outil (1) selon l'une des revendications précédentes, l'au moins une commande d'outil (11 à 14) comportant au moins une commande de soudage et/ou au moins une commande de vissage et/ou au moins une commande de perçage et/ou au moins une commande de rivetage et/ou au moins une commande de poinçonnage.

12. Procédé pour un système d'outil (1) d'un équipement d'assemblage (100), lequel comprend au moins deux commandes d'outil (11 à 14) destinées à commander un élément d'outil (111, 121, 131, 141) servant à manipuler au moins une pièce ouvrée (8), le procédé comprenant les étapes suivantes
commande (S1), par l'une des au moins deux commandes d'outil (11 à 14), de l'élément d'outil (111, 121, 131, 141) pour manipuler l'au moins une pièce ouvrée (8), réception (S4), avec un premier dispositif de manipulation de données (20), des données (112, 122, 132, 142) générées par la commande d'outil (11 à 14) lors de la manipulation de l'au moins une pièce ouvrée (8),
enregistrement (S5), par le premier dispositif de manipulation de données (20), des données (112, 122, 132, 142) dans une première base de données (21), et traitement (S6), avec un deuxième dispositif de manipulation de données (30), des données (112, 122, 132, 142) enregistrées dans la première base de données (20) par le premier dispositif de manipulation de données (20) pour une analyse des données (112, 122, 132, 142) et/ou la production d'une visualisation des données (112, 122, 132, 142),
le premier dispositif de manipulation de données (20) étant relié à l'équipement d'assemblage (100),
le deuxième dispositif de manipulation de données (30) étant configuré pour accéder à la première base de données (21), mais n'est toutefois pas relié au premier dispositif de manipulation de données (20) et à l'équipement d'assemblage (100), et
le premier dispositif de manipulation de données (21) étant configuré pour créer de nouveau l'une des au moins deux commandes d'outil (11 à 14) avec les données de référence (A) de la commande d'outil (11 à 14) dans la structure d'organisation du premier dispositif de manipulation de données (20) lorsque le premier dispositif de manipulation de données (20) reçoit de la part de la commande d'outil (11 à 14) des données (112, 122, 132, 142), la commande d'outil (11 à 14) étant cependant encore inconnue du premier dispositif de manipulation de données (21).
